# EUROPÄISCHE PATENTANMELDUNG

(11) **EP 1 041 366 A2**
(43) Veröffentlichungstag der Anmeldung: **04.10.2000**
(21) Anmeldenummer: 00104121.9
(22) Anmeldetag: 29.02.2000
(51) Int. Cl.: G01F 1/34

(54) **Drucktransmitterinstallation an einer Prozessleitung einer Prozessanlage und vormontierter Installationsblock**

(30) Priorität: 31.03.1999 DE 19914671
(71) Anmelder: Hess, Martin, 80339 München (DE)
(72) Erfinder: Hess, Martin, 80339 München (DE)
(74) Vertreter: Neubauer, Hans-Jürgen, Dipl.-Phys.

(57) **Zusammenfassung**

Die Erfindung betrifft eine Drucktransmitterinstallation (1; 24; 39) an einer Prozessleitung (2; 29, 30; 48, 49) einer Prozessanlage, wobei die Prozessleitung (2; 29, 30; 48, 49) mit einem heißen Medium beaufschlagbar ist. Ferner ist wenigstens eine mediumbeaufschlagte Messleitung (5; 26, 27; 40, 41) zwischen der Prozessleitung (2; 29, 30; 48, 49) und einem Ventilblock (4) des Drucktransmitters (3; 25; 42) vorgesehen. Weiter sind Flanschverbindungen (6, 10; 31, 32; 44) zwischen Anschlüssen an der Prozessleitung (2; 29; 30) und der Messleitung (5; 26, 27; 40, 41) sowie zwischen dem Ventilblock (4) und der Messleitung (5; 26, 27; 40, 41) vorgesehen, die jeweils durch Schraubverbindungen (9, 13; 38) verbunden sind. Erfindungsgemäß ist zwischen einem prozessleitungsseitigen Flansch (7; 33) und dem ersten messleitungsseitigen Flansch (8; 34) und/oder zwischen dem ventilblockseitigen Flansch (11; 35) und dem zweiten messleitungsseitigen Flansch (12; 36) jeweils eine dichte, wärmedämmende Zwischenschicht (16, 20; 37; 45) angebracht. Durch diese wärmedämmende Zwischenschicht (16, 20; 37; 45) wird der Wärmeübergangswiderstand an den Flanschverbindungen (6, 10; 31, 32; 44) wesentlich erhöht, so daß bei geeigneten Dimensionierungen auch mit kurzen Messleitungen die zulässige Maximaltemperatur am Drucktransmitter (3; 25; 42) nicht erreicht wird.

## Beschreibung

Die Erfindung betrifft eine Drucktransmitterinstallation an einer Prozessleitung einer Prozessanlage nach dem Oberbegriff des Anspruchs 1 und einen vormontierten Installationsblock nach dem Oberbegriff des Anspruchs 9.

In Prozessanlagen, wie in Chemie- und Raffinerieanlagen, werden zu Druckmessungen als Feldgeräte vor Ort installierte Drucktransmitter verwendet. Drucktransmitter werden beispielsweise zur Messung des Prozessmediumdrucks und zur Erfassung von Füllständen eingesetzt. Zu Durchflussmessungen werden in allgemein bekannter Weise Messblenden mit Differenzdrucktransmittern verwendet.

Eine dazu allgemein bekannte Drucktransmitterinstallation umfasst wenigstens eine mediumbeaufschlagte Messleitung zwischen der Prozessleitung und einem Ventilblock des Drucktransmitters. Für eine einfache Montage und gegebenenfalls Demontage ist es weiter bekannt, die wenigstens eine Messleitung durch Flanschverbindungen anzuschließen. Dazu ist eine Flanschverbindung zwischen Anschlüssen der Prozessleitung und der Messleitung bestehend aus einem prozessleitungsseitigen Flansch und einem zugeordneten ersten messleitungsseitigen Flansch vorgesehen, die durch Schraubverbindungen verbunden sind. Zudem ist eine Flanschverbindung zwischen dem Ventilblock und der Messleitung bestehend aus einem ventilblockseitigen Flansch und einem zugeordneten, zweiten messleitungsseitigen Flansch vorgesehen, die ebenfalls durch Schraubverbindungen verbunden sind. Der ventilblockseitige Flansch kann auch als Anlageplatte ausgebildet sein.

Bei einer herkömmlichen Drucktransmitterinstallation ist der Drucktransmitter relativ weit von der Prozessleitung entfernt angeordnet und mit langen Messleitungen angeschlossen. Eine solche Drucktransmitterinstallation ist aufwendig, da der Drucktransmitter und der Ventilblock an einer geeigneten Stelle separat zu befestigen sind und dann die langen Messleitungen angeschlossen werden müssen. Zudem können lange Messleitungen gegebenenfalls zu Messunsicherheiten führen. Wenn die Prozessleitung mit einem heißen Medium beaufschlagt ist, bestehen hier regelmäßig keine Überhitzungsprobleme am Drucktransmitter, da eine Abkühlung über die langen Messleitungen erfolgt und am Drucktransmitter eine zulässige Temperatur nicht überschritten wird. Dabei ist insbesondere zu berücksichtigen, daß die Messleitungen für die Druckmessung lediglich Stichleitungen sind, die zwar mit dem Medium beaufschlagt sind, durch die dieses jedoch nicht kontinuierlich fließt.

Zur Reduzierung des Installationsaufwandes ist es bereits bekannt, eine Drucktransmitterinstallation direkt an einer Prozessleitung durchzuführen, bei der wenigstens eine kurze und stabile Messleitung eine Trägerfunktion für den Ventilblock und den Drucktransmitter übernimmt.

Bei einer solchen Drucktransmitterinstallation an einer mit heißem Medium beaufschlagten Prozessleitung können jedoch wegen des guten Wärmeübergangs durch die kurze, wenigstens eine Messleitung die für den Drucktransmitter zulässigen Maximaltemperaturen überschritten werden. Damit ist diese vorteilhafte Installation nicht möglich und es muß auf die bekannte, eingangs erwähnte, aufwendige Installationsart mit langen Messleitungen und einer separaten Befestigung des Ventilblocks und des Drucktransmitters zurückgegriffen werden.

Weiter wurde bereits eine direkte Drucktransmitterinstallation an einer heißen Prozessleitung vorgeschlagen (WO 97/22855, Fig. 2), bei der der Drucktransmitter mit relativ langen Messleitungen in einem Abstand von der Prozessleitung angebracht ist und mit dieser durch zusätzliche Haltemittel verbunden ist. Trotz der direkten Installation dieses Drucktransmitters an der Prozessleitung ist somit auch hier der Installationsaufwand durch zusätzliche Haltemittel erheblich, da eine Befestigung nur über die langen Messleitungen nicht ausreichend stabil ist.

Aufgabe der Erfindung ist es, eine gattungsgemäße Drucktransmitterinstallation an einer mit einem heißen Medium beaufschlagbaren Prozessleitung einer Prozessanlage so weiterzubilden, daß bei einfacher Montage und guter Messfunktion keine Überhitzung am Drucktransmitter auftritt. Eine weitere Aufgabe der Erfindung ist es, dazu einen geeigneten, vormontierten Installationsblock vorzuschlagen.

Die Aufgabe der Erfindung wird hinsichtlich der Drucktransmitterinstallation mit den Merkmalen des Anspruchs 1 und hinsichtlich des Installationsblocks mit den Merkmalen des Anspruchs 9 gelöst.

Gemäß Anspruch 1 ist zwischen dem prozessleitungsseitigen Flansch und dem ersten messleitungsseitigen Flansch und/oder zwischen dem ventilblockseitigen Flansch und dem zweiten messleitungsseitigen Flansch jeweils eine dichte, wärmedämmende Zwischenschicht angebracht.

Dabei können, abgestimmt auf die jeweilige Einbausituation, entweder zwei oder aber auch nur eine Flanschverbindung vorgesehen sein.

Da die wenigstens eine Messleitung als Stichleitung vom heißen Medium nicht kontinuierlich durchströmt wird, ergibt sich im stationären Zustand im wesentlichen eine Wärmeleitung in den Verbindungsmaterialien zwischen der Prozessleitung und der temperaturempfindlichen Elektronik des Drucktransmitters. Durch die erfindungsgemäße, wärmedämmende Zwischenschicht an einer oder mehreren Flanschverbindungen wird dort der Wärmeübergangswiderstand wesentlich erhöht, so daß bei geeigneten Dimensionierungen auch bei kurzen Messleitungen die zulässige Maximaltemperatur am Drucktransmitter nicht erreicht wird.

Die Einbringung einer wärmedämmenden Zwischenschicht zwischen zugeordnete Flansche ist einfach möglich. Bei entsprechender Stabilität dieser Zwischenschicht wird dadurch auch die Tragfunktion einer kurzen Messleitung für den Ventilblock und den Drucktransmitter nicht ungünstig beeinflusst, so daß für deren Befestigung keine zusätzlichen Befestigungsmittel erforderlich sind.

Besonders geeignet als Zwischenschicht ist gemäß Anspruch 2 eine Kunststoffscheibe mit einer Mediendurchtrittöffnung, wobei die Kunststoffscheibe dichtend oder gegebenenfalls unter Verwendung eines weiteren Dichtrings zwischen die zugeordneten Flansche geklemmt wird.

Vorteilhaft ist in üblicher Weise gemäß Anspruch 3 in der Messleitung zudem ein Absperrventil angeordnet.

Es ist bekannt, eine Drucktransmitterinstallation im Feld einer Prozessanlage zu beheizen. Damit wird vermieden, daß in der kalten Jahreszeit der Drucktransmitter auf unzulässig tiefe Temperaturen abgekühlt wird und daß möglicherweise das Medium in der Messleitung einfriert oder messverfälschend zäh wird. Dazu ist jedoch von der Heizung ausgehend ein Wärmetransport durch und entlang der wenigstens einen Messleitung in Richtung auf die Prozessleitung erforderlich. Bei Drucktransmitterinstallationen, wo aufgrund der individuellen Gegebenheiten ein solcher Wärmetransport erforderlich ist, wird mit Anspruch 4 vorgeschlagen, keine wärmedämmende Zwischenschicht in einer transmitternahen Flanschverbindung einzusetzen sondern nur zwischen dem prozessseitigen Flansch und dem zugeordneten ersten messleitungsseitigen Flansch. Bei entsprechender Dimensionierung kann damit einerseits bei einer Beaufschlagung der Prozessleitung mit heißen Medien eine Überhitzung am Transmitter vermieden werden und andererseits kann bei einer Beaufschlagung der Prozessleitung mit kühlen Medien und/oder bei kühlen Außentemperaturen eine unzulässige Abkühlung des Drucktransmitters und der Messleitungen unterbunden werden.

Weiter werden zur Erhöhung des Wärmeübergangswiderstandes gemäß Anspruch 5 in Durchstecköffnungen der Flansche Buchsen, insbesondere Flanschbuchsen aus wärmedämmendem Material vorgesehen, durch die die Flanschverbindungsschrauben geführt sind, so daß der Wärmeübergang über die Flanschverbindungsschrauben zumindest reduziert ist.

Mit Anspruch 6 wird eine Drucktransmitterinstallation an einer Messblende zur Durchflussmessung mit zwei Messleitungen beansprucht, bei denen die erfindungsgemäßen, wärmedämmenden Zwischenschichten mit guter Funktion einsetzbar sind.

Es ist allgemein bekannt, eine Drucktransmitterinstallation zumindest teilweise in einem öffenbaren, zweiteiligen Schutzkasten aufzunehmen, wobei an wenigstens einem Schutzkastenteil, vorzugsweise einem Scharnierteil einer aufklappbaren Ausführung ein nach innen abstehender Innenhalter befestigt ist. Dieser Innenhalter ist mit der wenigstens einen Messleitung und/oder dem Ventilblock und/oder mit Flanschen verbunden (DE 44 42 944 A1). Nach Anspruch 7 wird als Weiterbildung dieser Drucktransmitterinstallation vorgeschlagen, daß der Innenhalter zumindest teilweise als Kühlkörper mit großflächigen Wärmeabstrahlflächen ausgeführt ist. Damit wird vorteilhaft zusätzlich zu der erfindungsgemäßen Erhöhung des Wärmeübergangwiderstandes noch eine erhöhte Wärmeabstrahlung zum Schutz des Drucktransmitters durchgeführt.

Mit Anspruch 8 wird ein, die wesentlichen gegenständlichen Merkmale der vorbeschriebenen Drucktransmitterinstallation aufweisender, vormontierter Installationsblock beansprucht, der zur Verwendung in einer Drucktransmitterinstallation an einer mit heißem Medium beaufschlagbaren Prozessleitung einer Prozessanlage verwendbar ist.

Anhand einer Zeichnung wird die Erfindung näher erläutert.

Es zeigen:
- Fig. 1: eine schematische, perspektivische Darstellung einer Drucktransmitterinstallation mit einer Messleitung,
- Fig. 2: eine schematische Schnittdarstellung einer Flanschverbindung zwischen einem prozessleitungsseitigen Flansch und einem messleitungsseitigen Flansch unter Zwischenschaltung einer dichten, wärmedämmenden Zwischenschicht,
- Fig. 3: eine schematische Schnittdarstellung einer Flanschverbindung zwischen einem messleitungsseitigen Flansch und einem ventilblockseitigen Flansch unter Zwischenschaltung einer dichten, wärmedämmenden Zwischenschicht,
- Fig. 4: eine schematische, perspektivische Darstellung einer Drucktransmitterinstallation mit zwei Messleitungen zur Ausbildung eines Differenzdrucktransmitters, und
- Fig. 5: eine schematische, perspektivische Darstellung einer in einem öffenbaren, zweiteiligen Schutzkasten aufgenommenen Drucktransmitterinstallation.

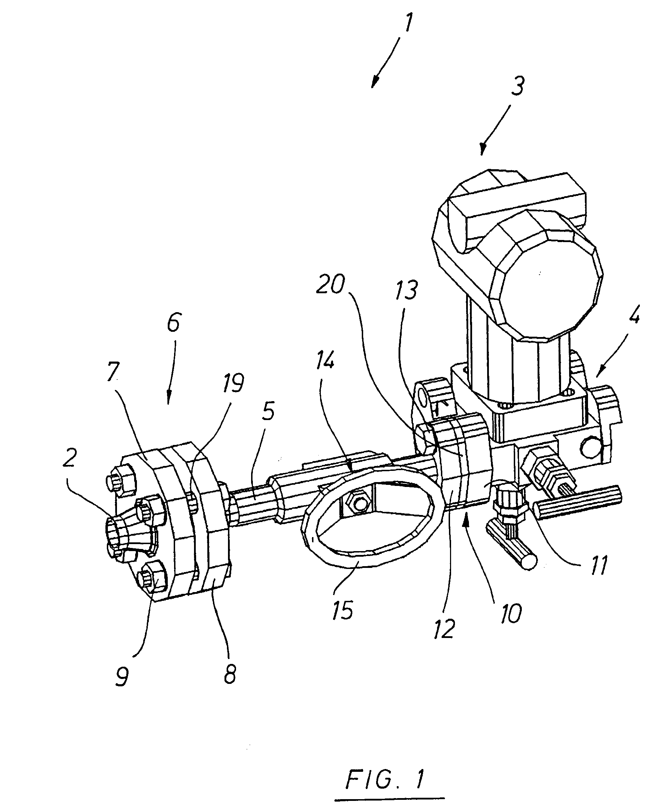

In der Fig. 1 ist perspektivisch eine Drucktransmitterinstallation 1 an einer hier nur schematisch dargestellten Prozessleitungsanschluss 2 einer nicht dargestellten Prozessanlage gezeigt, wobei dieser Prozessleitungsanschluss 2 mit einem heißen Medium beaufschlagbar ist.

Eine Drucktransmitterinstallation 1 umfaßt einen Drucktransmitter 3, einen Ventilblock 4 sowie eine Messleitung 5 zwischen dem Prozessleitungsanschluss 2 und dem Ventilblock 4.

Die Verbindung zwischen der Messleitung 5 und einem Prozessleitungsanschluss 2 erfolgt über eine erste Flanschverbindung 6, die aus einem prozessleitungsseitigen Flansch 7 und einem diesem zugeordneten ersten messleitungsseitigen Flansch 8 besteht. Diese beiden Flansche 7, 8 sind über Schraubverbindungen 9 miteinander verbunden.

Ferner ist die Messleitung 5 mit dem Ventilblock 4 über eine weitere, zweite Flanschverbindung 10 verbunden. Diese zweite Flanschverbindung 10 besteht aus einem ventilblockseitigen Flansch 11 und einem zweiten messleitungsseitigen Flansch 12, die durch Schraubverbindungen 13 miteinander verbunden sind.

Wie dies der Fig. 1 weiter entnommen werden kann, ist die Messleitung 5 kurz und stabil ausgeführt, wobei in dieser kurzen Messleitung 5 ein Absperrventil 14, das mittels eines Handrades 15 bedienbar ist, angeordnet ist. Bei einem solchen Aufbau ist der Ventilblock 4 mit angeschlossenem Drucktransmitter 3 freitragend von der mit der Prozessleitung verbundenen Messleitung 5 gehalten.

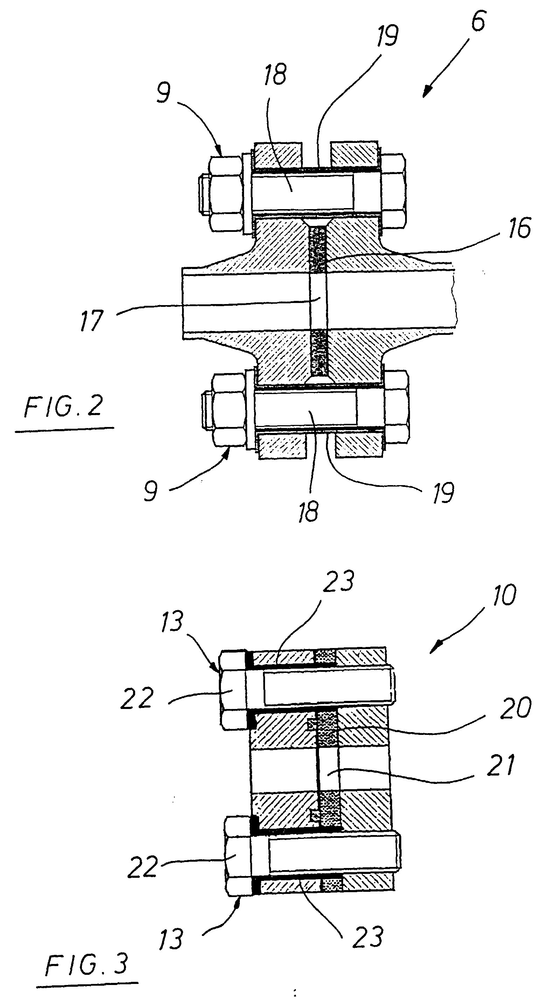

Zwischen dem prozessleitungsseitigen Flansch 7 und dem ersten messleitungsseitigen Flansch 8 der ersten Flanschverbindung 6 ist eine in der Fig. 2 im Querschnitt dargestellte Kunststoffscheibe 16 als wärmedämmende Zwischenschicht mit einer Mediumdurchtrittöffnung 17 geklemmt. Wie dies der Fig. 2 weiter entnommen werden kann, sind die Flanschverbindungsschrauben 18 der Schraubverbindungen 9 der ersten Flanschverbindung 16 in den Durchstecköffnungen der Flansche 7, 8 angeordneten Flanschbuchsen 19 aus wärmedämmendem Material aufgenommen. Dadurch ist eine gute Wärmeentkopplung bzw. Erhöhung des Wärmeübergangswiderstandes zwischen dem prozessleitungsseitigen Flansch 7 und dem ersten messleitungsseitigen Flansch 8 hergestellt.

Ebenso ist zwischen dem ventilblockseitigen Flansch 11 und dem zweiten messleitungsseitigen Flansch 12 der zweiten Flanschverbindung 10 eine weitere Kunststoffscheibe 20 als wärmedämmende Zwischenschicht mit einer Mediumdurchtrittöffnung 21 geklemmt. Auch hier sind die Flanschverbindungsschrauben 22 der Schraubverbindungen 13 in Flanschbuchsen 23 aus wärmedämmenden Material aufgenommen, so daß auch hier eine gute Wärmeentkopplung zwischen dem zweiten messleitungsseitigen Flansch 12 und dem ventilblockseitigen Flansch 11 hergestellt ist.

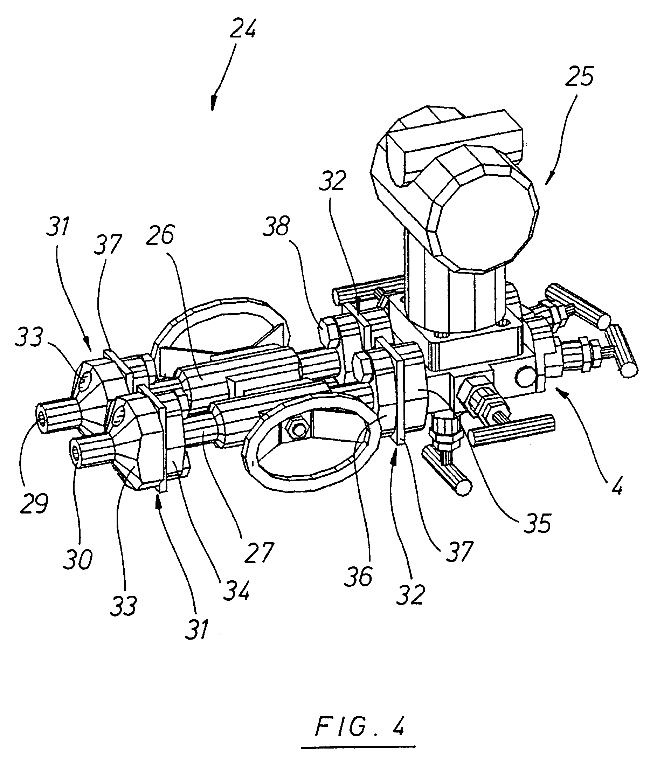

In der Fig. 4 ist eine alternative Ausführungsform einer Drucktransmitterinstallation 24 dargestellt, bei der ein Drucktransmitter 25 als Differenzdrucktransmitter mit zwei Messleitungen 26, 27 an Anschlüsse 29, 30 einer nicht dargestellten Messblendenanordnung einer Prozessleitung angeschlossen ist. Als dichte, wärmedämmende Zwischenschicht sind zwischen die prozessleitungsseitigen Flansche 33 und die ersten messleitungsseitigen Flansche 34 von ersten Flanschverbindungen 31 sowie zwischen die ventilblockseitigen Flansche 35 und die zweiten messleitungsseitigen Flansche 36 von zweiten Flanschverbindungen 32 jeweils rechteckförmige Kunststoffscheiben 37 mit Mediumdurchtrittöffnungen geklemmt. Analog zu den Schraubenverbindungen der Fig. 2 und 3 sind auch hier die Schraubenverbindungen 38 in nicht dargestellten Flanschbuchsen aus wärmedämmendem Material aufgenommen.

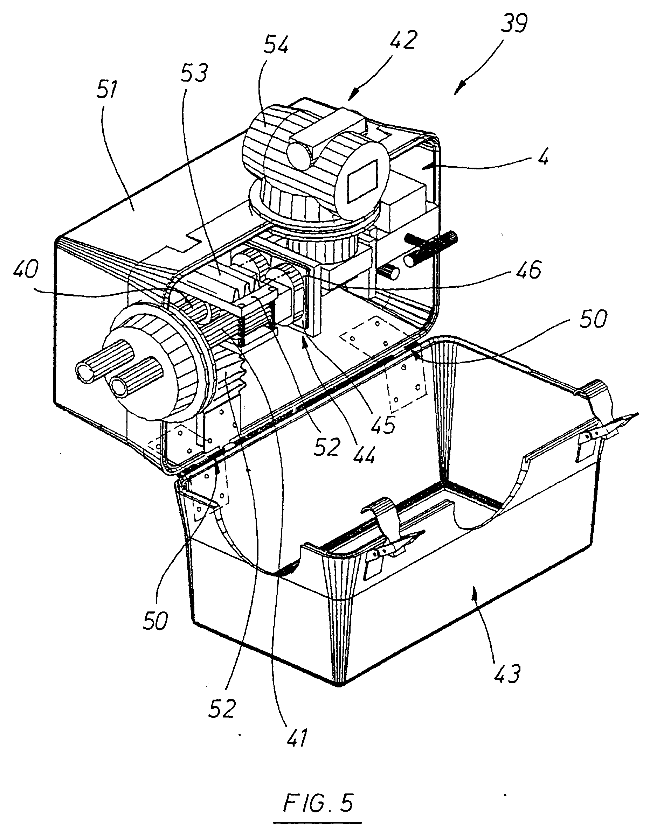

In der Fig. 5 ist schließlich eine Drucktransmitterinstallation 39 dargestellt, die ebenso wie die Ausführungsform nach Fig. 4 zwei Messleitungen 40, 41 aufweist. Die Drucktransmitterinstallation 39 ist hier teilweise in einem zweiteiligen Schutzkasten 43 aufgenommen. Die Messleitungen 40, 41 sind hier, wie in den beiden vorangehenden Ausführungsformen kurz und stabil ausgeführt und über erste Flanschverbindungen 44 unter Zwischenschaltung von Kunststoffscheiben 45 als wärmedämmende Zwischenschichten mit einer ventilblockseitigen Anlageplatte 46 verbunden. Auf der diesen Flanschverbindungen 44 gegenüberliegenden Seite sind an den Messleitungen 40, 41 weitere nicht dargestellte Flanschverbindungen entsprechend Fig. 4 angebracht.

An einem oberen, über Scharniere 50 klappbaren Schutzkastenteil 51 ist ein nach innen abstehender Innenhalter 52 befestigt, der mit den Messleitungen 40, 41 verbunden ist, um den Schutzkasten 43 an der Drucktransmitterinstallation 39 zu halten. An dem Innenhalter 52 sind Kühlrippen 53 als Wärmeabstrahlflächen angeordnet, mit denen eine zusätzliche Wärmeabfuhr möglich ist.

Wie dies ferner aus den Fig. 1, 4 und 5 ersichtlich ist, umfaßt jede der Drucktransmitterinstallationen 1, 24, 39 einen elektronischen Messkopf 54.

## Patentansprüche

1. Drucktransmitterinstallation an einer Prozessleitung einer Prozessanlage, wobei die Prozessleitung mit einem heißen Medium beaufschlagbar ist,
mit wenigstens einer mediumbeaufschlagten Messleitung zwischen der Prozessleitung und einem Ventilblock des Drucktransmitters,
mit einer Flanschverbindung zwischen Anschlüssen an der Prozessleitung und der Messleitung bestehend aus einem prozessleitungsseitigen Flansch und einem zugeordneten ersten messleitungsseitigen Flansch, die durch Schraubverbindungen verbunden sind, und/oder
mit einer Flanschverbindung zwischen dem Ventilblock und der Messleitung bestehend aus einem ventilblockseitigen Flansch und einem zugeordneten, zweiten messleitungsseitigen Flansch, die durch Schraubverbindungen verbunden sind,
dadurch gekennzeichnet,
daß zwischen dem prozessleitungsseitigen Flansch (7; 33) und dem ersten messleitungsseitigen Flansch (8; 34) und/oder zwischen dem ventilblockseitigen Flansch (11; 35) und dem zweiten messleitungsseitigen Flansch (12; 36) jeweils eine dichte, stark wärmedämmende Zwischenschicht (16, 20; 37; 45) angebracht ist, und
daß die wenigstens eine Messleitung (5; 26, 27; 40, 41) kurz und stabil ausgeführt ist und der Ventilblock (4) mit angeschlossenem Drucktransmitter (3; 25; 42) freitragend von der mit der Prozessleitung (2; 29, 30) verbundenen, wenigstens einen Messleitung (5; 26, 27; 40, 41) gehalten ist.

2. Drucktransmitterinstallation nach Anspruch 1, dadurch gekennzeichnet, daß die Zwischenschicht eine Kunststoffscheibe (16, 20; 37; 45) mit einer Mediumdurchtrittöffnung (17, 21) ist und die Kunststoffscheibe (16, 20; 37; 45) dichtend zwischen die zugeordneten Flansche (7, 8, 11, 12; 33, 34, 35, 36) geklemmt ist.

3. Drucktransmitterinstallation nach Anspruch 1 oder Anspruch 2, dadurch gekennzeichnet, daß in der Messleitung (5; 26, 27; 40, 41) ein Absperrventil (14) angeordnet ist.

4. Drucktransmitterinstallation nach einem der Ansprüche 1 bis 3, dadurch gekennzeichnet, daß am oder im Drucktransmitter (3; 25; 42) eine Heizung angebracht ist und die wärmedämmende Zwischenschicht (16, 20; 37; 45) nur zwischen dem prozessleitungsseitigen Flansch (7; 33) und dem zugeordneten ersten messleitungsseitigen Flansch (8; 34) angebracht ist.

5. Drucktransmitterinstallation nach einem der Ansprüche 1 bis 4, dadurch gekennzeichnet, daß die Flanschverbindungsschrauben (18, 22) in Durchstecköffnungen der Flansche (7, 8, 11, 12; 33, 34, 35, 36) in Buchsen, insbesondere Flanschbuchsen (19, 23) aus wärmedämmendem Material aufgenommen sind.

6. Drucktransmitterinstallation nach einem der Ansprüche 1 bis 5, dadurch gekennzeichnet, daß der Drucktransmitter ein Differenzdrucktransmitter (25) ist, der mit zwei Messleitungen (26, 27) an eine Messblendenanordnung der Prozessleitung angeschlossen ist.

7. Drucktransmitterinstallation nach einem der Ansprüche 1 bis 6, dadurch gekennzeichnet,
daß die Drucktransmitterinstallation (39) zumindest teilweise in einem öffenbaren, zweiteiligen Schutzkasten (43) aufgenommen ist,
daß an wenigstens einem Schutzkastenteil (51), vorzugsweise einem Scharnierteil einer aufklappbaren Ausführung ein nach innen abstehender Innenhalter (52) befestigt ist, der mit der wenigstens einen Messleitung (40, 41) und/oder dem Ventilblock (4) und/oder Flanschen verbunden ist, und
daß der Innenhalter (52) zumindest teilweise als Kühlkörper mit großflächigen Wärmeabstrahlflächen (53) ausgeführt ist.

8. Vormontierter Installationsblock zur Verwendung in einer Drucktransmitterinstallation an einer mit heißem Medium beaufschlagbaren Prozessleitung einer Prozessanlage,
mit wenigstens einer an Anschlüsse der Prozessleitung mit einer Flanschverbindung anschließbaren Messleitung, die einseitig mit einer Flanschverbindung an einen Ventilblock eines nachgeordneten Drucktransmitters angeschlossen ist,
dadurch gekennzeichnet,
daß die wenigstens eine Messleitung (5; 26, 27; 40, 41) kurz und stabil als Träger für den Ventilblock (4) und den Drucktransmitter (3; 25; 42) ausgeführt ist, und
daß zwischen die zugeordneten Flansche (7, 8, 11, 12; 33, 34, 35, 36) der prozessleitungsseitigen Flanschverbindung (6; 31) und/oder zwischen die zugeordneten Flansche der ventilblockseitigen Flanschverbindung (10; 32; 44) eine wärmedämmende Zwischenschicht, vorzugsweise als Kunststoffscheibe (16, 20; 37; 45), dicht eingebracht ist.
